(19) Europäisches Patentamt
European Patent Office
Office européen des brevets

(11) **EP 2 031 014 B1**

## (12) EUROPEAN PATENT SPECIFICATION

(45) Date of publication and mention
of the grant of the patent:
**23.01.2013 Bulletin 2013/04**

(51) Int Cl.:
*C08J 3/28* (2006.01)          *B29B 9/16* (2006.01)
*B29B 13/08* (2006.01)

(21) Application number: **07737140.9**

(22) Date of filing: **07.05.2007**

(86) International application number:
**PCT/JP2007/000484**

(87) International publication number:
**WO 2007/141902 (13.12.2007 Gazette 2007/50)**

(54) **METHOD FOR PRODUCTION OF AROMATIC POLYCARBONATE RESIN GRANULE AND RESIN MOLDED ARTICLE**

VERFAHREN ZUR HERSTELLUNG VON GRANULAT VON AROMATISCHEM POLYCARBONATHARZ UND HARZFORMKÖRPER

MÉTHODE DE PRODUCTION D'UN GRANULE DE RÉSINE POLYCARBONATE AROMATIQUE ET ARTICLE MOULÉ EN RÉSINE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **09.06.2006 JP 2006160748**

(43) Date of publication of application:
**04.03.2009 Bulletin 2009/10**

(73) Proprietor: **MITSUBISHI ENGINEERING-PLASTICS CORPORATION**
**Tokyo 105-0021 (JP)**

(72) Inventor: **TAMURA, Masaki**
**Hiratsuka-shi, Kanagawa 254-0016 (JP)**

(74) Representative: **HOFFMANN EITLE**
**Patent- und Rechtsanwälte**
**Arabellastrasse 4**
**81925 München (DE)**

(56) References cited:
**JP-A- 10 264 951      JP-A- 55 045 794**
**US-A- 3 150 066      US-A- 4 367 186**
**US-B1- 6 303 735**

Remarks:
The file contains technical information submitted after the application was filed and not included in this specification

**Description**

TECHNICAL FIELD

The present invention relates to a process for producing particles of an aromatic polycarbonate resin. More particularly, the present invention relates to a process for producing particles of an aromatic polycarbonate resin in which the amount of residual aromatic hydroxy compounds in the resin particles is extremely reduced.

BACKGROUND ART

Aromatic polycarbonate resins have been extensively used in various applications because they are excellent in various properties such as heat resistance, transparency, hygienic property and mechanical strength. As the method for producing the aromatic polycarbonate resins, there are known the method of reacting an aromatic dihydroxy compound such as bisphenol with phosgene (interfacial method), the method of subjecting an aromatic dihydroxy compound such as bisphenol or a derivative thereof and a carbonic diester compound such as diphenyl carbonate to esterification (transesterification) reaction while keeping these compounds in a melted state (melting method or transesterification method), etc.

It is also known that the aromatic polycarbonate resin obtained by the interfacial method (interfacial method aromatic polycarbonate resin) comprises residual bisphenol A (BPA) or tetrabromobisphenol A (TBA), and the aromatic polycarbonate resin obtained by the melting method (melting method aromatic polycarbonate resin) further comprises residual phenols in addition to the bisphenols, although the amounts of these residual phenols are very small. These residual phenols are contained in the aromatic polycarbonate resin at a level as low as causing no significant safety problems, but have such a risk that when used in containers for food, etc., a taste of the food tends to be adversely influenced thereby.

The residual phenols such as BPA and TBA are generally removed by allowing a solution obtained by dissolving particles of the aromatic polycarbonate resin in an organic solvent, etc., to come into contact with water, i.e., by washing the solution with water, using a multistage extraction method, an orifice tower, a stirring tank and the like. However, in some cases where the concentration of the polycarbonate resin in the organic solvent solution is high, it is not possible to fully remove the residual phenols only by the water-washing procedure owing to the high solution viscosity. Therefore, there have also been proposed the techniques for water-washing the aromatic polycarbonate resin solution having such a high concentration and a high viscosity.

More specifically, there have been proposed, for example, the method of water-washing the aromatic polycarbonate resin solution in the form of a water-in-oil phase using two-stage stirring tanks, converting the water-in-oil phase into an oil-in-water phase, and then allowing the oil-in-water phase to stand in a standing separation tank to remove the residual phenols therefrom (for example, refer to Patent Document 1), the method of stirring the aromatic polycarbonate resin solution with a predetermined agitation power or more to form a water-in-oil phase, and then subjecting the resulting water-in-oil phase to centrifugal separation to remove the residual phenols therefrom (for example, refer to Patent Document 2), the method of applying an adequate agitation power to the mixture in the step of forming the water-in-oil phase and the step of forming the oil-in-water phase (for example, refer to Patent Document 3), etc.

In addition, as the method for removing the residual phenols present in particles of the melting method aromatic polycarbonate resin from a high-viscosity melt of the polycarbonate, there is known, for example, the method of treating the particles at a high temperature usually ranging from 250 to 330°C under a high vacuum condition for a long period of time. However, in this method, the polycarbonate resin to be treated must be exposed to the high temperature condition for a long period of time.

In such a case, an alkali metal compound such as sodium hydroxide which is used as a transesterification catalyst tends to cause side reactions such as decarboxylation and Kolbe-Schmitt analogous reactions. The occurrence of the side reactions further tends to cause formation of a branched structure in polycarbonate resin chains or formation of a crosslinked product of the polycarbonate resin chains, thereby causing problems such as discoloration of the polycarbonate resin. Thus, in the melting method, there generally tends to arise such a problem that the resulting aromatic polycarbonate resin hardly exhibits an excellent quality which is well-balanced between a color tone and a molecular weight thereof.

To solve these problems, there has been proposed the method of adding a transition metal capturing agent together with a sulfonic ester compound to a reaction product obtained by subjecting a dihydroxy compound and a carbonic diester to melt polycondensation in the presence of a catalyst comprising an alkali metal compound, and then treating the resulting mixture under reduced pressure (for example, refer to Patent Document 4). However, the above method has such a disadvantage that the phenols are not fully removed from the obtained resin or the productivity is very poor, and is therefore unpractical.

Patent Document 1: Japanese Patent Publication (KOKOKU) No. 59-38967(1984)

US 6,303,375 BI relates to a polycarbonate production method, comprising: subjecting a dihydroxy compound and a carbonic acid diester to melt polycondensation in the presence of a catalyst which comprises an alkyl metal compound or an alkaline-earth metal compound in an amount of $1 \times 10^{-8}$ to $1 \times 10^{-5}$ mole per mole of dihydroxy compound to form a polycarbonate; adding a sulfonic acid ester compound and a transition metal scavenger to the polycarbonate, wherein the transition metal scavenger comprises a phosphorous acid monoalkyl ester or ethylenediamine tetraacetic acid; and treating the polycarbonate at a reduced pressure.

US 4,367,186 relates to a process for the preparation of a modified thermoplastic polycarbonate molding composition, characterized in that a crosslinkable thermoplastic, aromatic polycarbonate is crosslinked on the surface by irradiation with high-energy rays, after being granulated, and is then extruded or injection molded, the proportion of crosslinked polycarbonate being 5-50% by weight, relative to the total weight of non-crosslinked and crosslinked polycarbonate.

US 3,150,066 relates to a process for increasing the tensile strength of linear high molecular weight polycarbonates selected from the group consisting of polydihydroxy-diaryl alkane carbonates, polydihydroxy-diaryl ether carbonates, polydihydroxy-diaryl thioether carbonates, and polydihydroxy-diaryl sulfone carbonates which comprises treating said polycarbonates with a radiation dosage of about 1-100 mr.

Patent Document 2: Japanese Patent Application Laid-Open (KOKAI) No. 1-96212(1989)
Patent Document 3: Japanese Patent Application Laid-Open (KOKAI) No. 9-52949(1997)
Patent Document 4: Japanese Patent Application Laid-Open (KOKAI) No. 2000-351844

DISCLOSURE OF THE INVENTION

PROBLEM TO BE SOLVED BY THE INVENTION

An object of the present invention is to provide a process for producing particles of an aromatic polycarbonate resin in which, in particular, when a resin molded product obtained by melt-molding the aromatic polycarbonate resin particles is used as a container for preserving food, etc., residual phenols in the resin molded product which tend to cause deterioration in a taste of the food to be preserved can be considerably reduced.

MEANS FOR SOLVING THE PROBLEM

As a result of the present inventors' earnest study for solving the above conventional problems, it has been found as an unexpected fact that when irradiating an ionizing radiation in the presence of a polar solvent to an aromatic polycarbonate resin obtained by reacting an aromatic dihydroxy compound with phosgene or a carbonic diester, in particular, to a solidified product of the aromatic polycarbonate resin such as particles, strands produced by melt extrusion and a powder, it is possible to reduce residual phenols in the resulting aromatic polycarbonate resin. The present invention has been attained on the basis of the above finding.

That is, the present invention relates to a process for producing particles of an aromatic polycarbonate resin which comprises the step of irradiating an ionizing radiation in the presence of a polar solvent to the aromatic polycarbonate resin obtained by reacting an aromatic dihydroxy compound with phosgene or a carbonic diester.

EFFECT OF THE INVENTION

According to the production process of the present invention, there can be provided a polycarbonate resin or a resin molded product obtained by melt-molding the resin in which phenols remaining in the aromatic polycarbonate resin particles can be readily and simply reduced, and when forming the resin particles into an aromatic polycarbonate resin molded product, in particular, a resin molded product such as a container for preserving food, it is possible to inhibit the food from being deteriorated in a taste thereof.

PREFERRED EMBODIMENTS FOR CARRYING OUT THE INVENTION

The present invention is described in detail below. The aromatic polycarbonate resin used in the present invention is a branched or non-branched thermoplastic aromatic polycarbonate resin or copolymer which is obtained by reacting an aromatic dihydroxy compound, or the aromatic dihydroxy compound together with a small amount of a polyhydroxy compound, with phosgene or a carbonic diester compound.

Thus, the aromatic polycarbonate resin according to the present invention is obtained by reacting the aromatic dihydroxy compound with phosgene or the carbonic diester as a carbonate precursor, more specifically, is produced, for example, by an interfacial polymerization method or a melting method.

Specific examples of the aromatic dihydroxy compound used as a raw material of the aromatic polycarbonate resin include bis(hydroxyaryl)alkanes such as 2,2-bis(4-hydroxyphenyl)propane (= bisphenol A), 2,2-bis(3,5-bibromo-4-hydroxyphenyl)propane (= tetrabromobisphenol A), bis(4-hydroxyphenyl)methane, 1,1-bis(4-hydroxyphenyl)ethane, 2,2-bis(4-hydroxyphenyl)butane, 3,3',5,5'-tetramethyl-4,4'-dihydroxy biphenyl, 2,2-bis(4-hydroxyphenyl)octane, 2,2-bis(4-hydroxy-3-t-butylphenyl)propane, 2,2-bis(4-hydroxy-3-methylphenyl)propane, 1,1-bis(3-tert-butyl-4-hydroxyphenyl) propane, 2,2-bis(4-hydroxy-3,5-dimethylphenyl)propane, 2,2-bis(3-bromo-4-hydroxyphenyl)propane, 2,2-bis(3,5-dichloro-4-hydroxyphenyl)propane, 2,2-bis(3-phenyl-4-hydroxyphenyl)propane, 2,2-bis(3-cyclohexyl-4-hydroxyphenyl) propane, 4,4-bis(4-hydroxyphenyl)heptane, 1,1-bis(4-hydroxyphenyl)-1-phenylethane, bis(4-hydroxyphenyl)diphenylmethane, 2,2-bis(4-hydroxyphenyl)-1,1,2-trichloropropane, 2,2-bis(4-hydroxyphenyl)-1,1,1,3,3,3-hexachloropropane and 2,2-bis(4-hydroxyphenyl)-1,1,1,3,3,3-hexafluoropropane;

bis(hydroxyaryl)cycloalkanes such as 1,1-bis(4-hydroxyphenyl)cyclopentane, 1,1-bis(4-hydroxyphenyl)cyclohexane and 1,1-bis(4-hydroxyphenyl)-3,3,5-trimethylcyclohexane; bisphenols having a cardo structure such as 9,9-bis(4-hydroxyphenyl)fluorene and 9,9-bis(4-hydroxy-3-methylphenyl)fluorene;

dihydroxydiaryl ethers such as 4,4'-dihydroxydiphenyl ether and 4,4'-dihydroxy-3,3'-dimethyldiphenyl ether; dihydroxydiaryl sulfides such as 4,4'-dihydroxydiphenyl sulfide and 4,4'-dihydroxy-3,3'-dimethyldiphenyl sulfide; dihydroxydiaryl sulfoxides such as 4,4'-dihydroxydiphenyl sulfoxide and 4,4'-dihydroxy-3,3'-dimethyldiphenyl sulfoxide; dihydroxydiaryl sulfones such as 4,4'-dihydroxydiphenyl sulfone and 4,4'-dihydroxy-3,3'-dimethyldiphenyl sulfone; hydroquinone; resorcin; 4,4'-dihydroxydiphenyl; and bis(4-hydroxyphenyl)ketone.

Among the above aromatic dihydroxy compounds, preferred are bis(4-hydroxyphenyl)alkanes, and more preferred is 2,2-bis(4-hydroxyphenyl)propane [= bisphenol A (BPA] from the viewpoint of a good impact resistance of the resultant aromatic polycarbonate resin. These aromatic dihydroxy compounds may be used alone or in combination of any two or more thereof.

In the present invention, the aromatic polycarbonate resin is obtained by reacting the above aromatic dihydroxy compound with phosgene or the carbonic diester as a carbonate precursor.

Examples of the carbonate precursor to be reacted with the aromatic dihydroxy compound include carbonyl halides such as phosgene, and carbonic diesters such as diaryl carbonates and dialkyl carbonates. These carbonate precursors may also be used alone, or used in combination of any two or more thereof at any optional proportion. Specific examples of the carbonic diesters include diaryl carbonates such as diphenyl carbonate and ditolyl carbonate; and dialkyl carbonates such as dimethyl carbonate, diethyl carbonate and di-t-butyl carbonate.

In particular, in the present invention, as the carbonate precursor used for reacting with the aromatic dihydroxy compound, the carbonic diesters are preferred. Further, among these carbonic diesters, preferred are diphenyl carbonate and substituted diphenyl carbonates, and more preferred is diphenyl carbonate.

In addition, a part of monovalent hydrocarbon end groups of the above carbonic diester may be substituted with a dicarboxylic acid or a dicarboxylic ester. The content of the dicarboxylic acid substituent group or the dicarboxylic ester substituent group in the carbonic diester is usually not more than 50 mol% and preferably not more than 30 mol% based on the monovalent hydrocarbon end groups. Typical examples of the dicarboxylic acid or the dicarboxylic ester as the substituent group include terephthalic acid, isophthalic acid and esters of these acids, as well as diphenyl terephthalate and diphenyl isophthalate. When a part of the monovalent hydrocarbon end groups of the carbonic diester is substituted with the dicarboxylic acid or the dicarboxylic ester, the obtained reaction products are polyester carbonates.

Further, the aromatic polycarbonate resin used in the present invention may be in the form of a branched aromatic polycarbonate resin obtained by copolymerizing a trivalent or more polyfunctional aromatic compound therewith. Examples of the trivalent or more polyfunctional aromatic compound include polyhydroxy compounds such as fluoroglucin, 4,6-dimethyl-2,4,6-tri(4-hydroxyphenyl)heptene-2, 4,6-dimethyl-2,4,6-tri(4-hydroxyphenyl)heptane, 2,6-dimethyl-2,4,6-tri(4-hydroxyphenyl)heptene-3, 1,3,5-tri(4-hydroxyphenyl)benzene and 1,1,1-tri(4-hydroxyphenyl)ethane; 3,3-bis(4-hydroxyaryl)oxyindole (= isatin bisphenol); 5-chloroisatin; 5,7-dichloroisatin; and 5-bromoisatin.

Among these polyfunctional aromatic compounds, preferred is 1,1,1-tri(4-hydroxyphenyl)ethane. The polyfunctional aromatic compound may be used by replacing a part of the above aromatic dihydroxy compound therewith. The amount of the polyfunctional aromatic compound used is preferably 0.01 to 10 mol% and more preferably 0.1 to 2 mol% on the basis of the aromatic dihydroxy compound.

Next, the methods for producing the aromatic polycarbonate resin used in the present invention is described. Among the methods used for production of the aromatic polycarbonate resin in the present invention, the interfacial polymerization method is first explained.

In the polymerization reaction of the production method, the aromatic dihydroxy compound is first reacted with phosgene in the presence of an organic solvent inert to the reaction and an alkali aqueous solution while maintaining the reaction system at a pH value of usually not less than 9 using, if required, a molecular weight controller (end stopping agent) and an antioxidant for preventing oxidation of the aromatic dihydroxy compound, and then a polymerization catalyst such as a tertiary amine or a quaternary ammonium salt is added to the reaction system to conduct an interfacial polymerization of the raw material components, thereby obtaining a polycarbonate. The time of addition of the molecular weight controller is not particularly limited as long as the molecular weight controller is added during the period between the reaction with phosgene and initiation of the polymerization reaction. Meanwhile, the reaction temperature is, for example, 0 to 40°C, and the reaction time is, for example, from several minutes (for example, 10 min) to several hours (for example, 6 hr).

Examples of the organic solvent inert to the reaction include chlorinated hydrocarbons such as dichloromethane, 1,2-dichloroethane, chloroform, monochlorobenzene and dichlorobenzene; and aromatic hydrocarbons such as benzene, toluene and xylene. Examples of the alkali compound used for preparing the alkali aqueous solution include hydroxides of alkali metals such as sodium hydroxide and potassium hydroxide.

Examples of the molecular weight controller include compounds having a monovalent phenolic hydroxyl group. Specific examples of the compounds having a monovalent phenolic hydroxyl group include m-methyl phenol, p-methyl phenol, m-propyl phenol, p-propyl phenol, p-tert-butyl phenol and p-long chain alkyl-substituted phenols. The amount of the molecular weight controller used is preferably 50 to 0.5 mol and more preferably 30 to 1 mol on the basis of 100 mol of the aromatic dihydroxy compound.

Examples of the polymerization catalyst include tertiary amines such as trimethylamine, triethylamine, tributylamine, tripropylamine, trihexylamine and pyridine; and quaternary ammonium salts such as trimethylbenzyl ammonium chloride, tetramethyl ammonium chloride and triethylbenzeyl ammonium chloride.

Next, the melting method is explained. The polymerization reaction of the production method may be conducted, for example, by subjecting the carbonic diester and the aromatic dihydroxy compound to transesterification reaction. Examples of the carbonic diester include dialkyl carbonate compounds such as dimethyl carbonate, diethyl carbonate and di-tert-butyl carbonate; diphenyl carbonate; and substituted diphenyl carbonates such as ditolyl carbonate. Among these carbonic diesters, preferred are diphenyl carbonate and substituted diphenyl carbonates, and more preferred is diphenyl carbonate.

Also, the amount of an end hydroxyl group contained in the aromatic polycarbonate resin has a large influence on thermal stability, hydrolysis stability and color tone of the obtained polycarbonate resin product, and, therefore, may be appropriately controlled by conventionally known optional methods. In the reaction of the melting transesterification method, the mixing ratio between the carbonic diester and the aromatic dihydroxy compound as well as the vacuum degree used upon the transesterification reaction may be usually controlled to obtain an aromatic polycarbonate resin which has a desired molecular weight and is well-controlled in amount of the end hydroxyl group contained therein.

In the melting transesterification reaction, the carbonate diester is usually used in an equimolar amount or more and preferably in an amount of 1.001 to 1.3 mol and more preferably 1.01 to 1.2 mol on the basis of 1 mol of the aromatic dihydroxy compound. In order to positively control the amount of the end hydroxyl group, there may be used such a method of separately adding an end stopping agent upon the reaction. Examples of the end stopping agent include monohydric phenols, monovalent carboxylic acids and carbonic diesters.

When the molar amount of the carbonic diester based on 1 mol of the aromatic dihydroxy compound is controlled to more than 1.001 mol, it is possible to suppress increase of the end OH groups in the obtained melting method aromatic polycarbonate resin, so that the aromatic polycarbonate resin tends to be enhanced in thermal stability and hydrolysis resistance. Whereas, when the molar amount of the carbonic diester based on 1 mol of the aromatic dihydroxy compound is controlled to not more than 1.3 mol, although the amount of the end OH groups in the obtained melting method aromatic polycarbonate resin is reduced, there is such a preferred tendency that the transesterification reaction rate can be maintained under the same conditions, and the aromatic polycarbonate resin having a desired molecular weight can be readily produced.

The end hydroxyl group concentration of the aromatic polycarbonate resin used in the present invention is usually not more than 1000 ppm, preferably not more than 800 ppm and more preferably not more than 600 ppm. The lower limit of the end hydroxyl group concentration of the aromatic polycarbonate resin, in particular, such an aromatic polycarbonate resin produced by a transesterification method, is not less than 10 ppm, preferably not less than 30 ppm and more preferably not less than 40 ppm.

When the end hydroxyl group concentration of the aromatic polycarbonate resin is controlled to not less than 10 ppm, the aromatic polycarbonate resin is prevented from undergoing deterioration in a molecular weight thereof, resulting in such a tendency that the obtained resin composition is further enhanced in mechanical properties. Also, when the end hydroxyl group concentration of the aromatic polycarbonate resin is controlled to not more than 1000 ppm, the obtained resin composition tends to be further enhanced in retention thermal stability and color tone.

Meanwhile, the unit of the above end hydroxyl group concentration is expressed by "ppm" which represents a weight of the end hydroxyl group based on the weight of the aromatic polycarbonate resin. The end hydroxyl group concentration may be measured by colorimetric quantity determination using a titanium tetrachloride/acetic acid method (the method described in "Macromol. Chem.", 88, 215 (1965)).

Upon producing the polycarbonate resin by the melting method, the reaction is usually conducted in the presence of a transesterification catalyst. The transesterification catalyst used in the reaction is not particularly limited, and is preferably an alkali metal compound and/or an alkali earth metal compound. The transesterification catalyst may be used in combination with a basic compound as an auxiliary component such as a basic boron compound, a basic phosphorus compound, a basic ammonium compound and an amine-based compound. These catalyst compounds may be used alone, or used in combination of any two or more thereof at an optional proportion.

These catalysts are used in an amount of 0.05 to 5 $\mu$mol, preferably 0.08 to 4 $\mu$mol and more preferably 0.1 to 2 $\mu$mol on the basis of 1 mol of the aromatic dihydroxy compound. When the amount of the catalysts used is too small, there is such a tendency that a polymerization activity required for producing the aromatic polycarbonate resin having a desired molecular weight is not attainable. On the contrary, when the amount of the catalysts used is too large, the resulting polymer tends to be deteriorated in hue, and also suffer from promoted branching and poor fluidity upon molding.

The transesterification reaction using the above raw materials may be conducted at a temperature of 100 to 320°C and preferably 150 to 320°C, and then the transesterification reaction product may be further subjected to melt polycondensation reaction under reduced pressure finally reaching not more than 2 mm Hg, while removing by-products such as aromatic hydroxy compounds from the reaction mixture.

The melt polycondensation may be conducted by either a batch method or a continuous method, and is preferably conducted by a continuous method from the viewpoints of a good stability, etc., of the aromatic polycarbonate resin and the resin particles obtained in the present invention. In the case of the continuous method, the reaction is generally conducted using two or more polymerizers (multistage process including two or more stages). In particular, the reaction is preferably continuously performed in the multistage process including 3 to 7 stages.

In such a multistage process, the average residence time in the respective stages is usually 5 to 150 min. In addition, in order to efficiently discharge the aromatic hydroxy compounds such as phenol which are by-produced as the reaction proceeds, out of the reaction system, the respective polymerizers are preferably controlled such that the temperature and vacuum degree therein are stepwise increased within the ranges limited by the above reaction conditions. Meanwhile, in order to prevent the resulting aromatic polycarbonate resin from being deteriorated in qualities such as hue, it is preferred that the reaction be conducted at a temperature as low as possible for a residence time as short as possible.

Examples of the preferred catalyst deactivator used in the melting method include a compound capable of neutralizing the transesterification catalyst, for example, sulfur-containing acid compounds and derivatives formed therefrom. Such a compound capable of neutralizing the transesterification catalyst is added in an amount of preferably 0.5 to 10 equivalents and more preferably 1 to 5 equivalents on the basis of the alkali metal contained in the catalyst. Further, the compound capable of neutralizing the transesterification catalyst is added in an amount of preferably 1 to 100 ppm and more preferably 1 to 20 ppm on the basis of the polycarbonate resin.

The molecular weight of the aromatic polycarbonate resin used in the present invention may be appropriately selected and determined, and may be controlled such that the viscosity-average molecular weight [Mv] calculated from a solution viscosity thereof is preferably in the range of 10,000 to 50,000. The aromatic polycarbonate having a viscosity-average molecular weight of not less than 10,000 tends to be further improved in mechanical strength, and can be therefore more suitably used in the applications requiring a higher mechanical strength. Whereas, the aromatic polycarbonate having a viscosity-average molecular weight of not more than 50,000 tends to be more effectively prevented from undergoing deterioration in fluidity, and is therefore more preferable from the viewpoint of facilitated molding process.

The viscosity-average molecular weight of the aromatic polycarbonate resin is more preferably 12,000 to 40,000, still more preferably 15,000 to 40,000 and further still more preferably 20,000 to 30,000. Also, two or more kinds of the aromatic polycarbonate resins that are different in viscosity-average molecular weight from each other may be used in the form of a mixture thereof. Further, the above aromatic polycarbonate resin may also be mixed with those aromatic polycarbonate resins having a viscosity-average molecular weight which is out of the above-specified range, if required.

Meanwhile, the viscosity-average molecular weight [Mv] as used in the present invention means the value calculated from an intrinsic viscosity [$\eta$] (unit: dL/g) as measured at 25°C in methylene chloride as a solvent using an Ubbellohde viscometer, according to Schnell's viscosity formula: $\eta = 1.23 \times 10^{-4} M^{0.83}$ wherein the intrinsic viscosity [$\eta$] is the value calculated from a specific viscosity [$\eta_{sp}$] as measured at each solution concentration [C] (g/dL) according to the following formula:

$$\eta = \lim_{c \to 0} \eta_{sp}/C.$$

In addition, the aromatic polycarbonate resin used in the present invention may also comprise an aromatic polycarbonate oligomer in order to improve an appearance of a molded product obtained therefrom as well as a fluidity of the resin composition. The viscosity-average molecular weight [Mv] of the aromatic polycarbonate oligomer is preferably 1,500 to 9,500 and more preferably 2,000 to 9,000. The aromatic polycarbonate oligomer is preferably used in an amount of not more than 30% by weight on the basis of the weight of the aromatic polycarbonate resin component.

The effects of the present invention can be remarkably exhibited, in particular, when applied to the melting method aromatic polycarbonate resin, and further become more remarkable when applied to the melting method aromatic polycarbonate resin whose end OH group concentration lies in the range of 10 to 1000 ppm.

Further, in the present invention, as the aromatic polycarbonate resin, there may be used not only the virgin resin, but also those aromatic polycarbonate resins regenerated from used resin products, i.e., so-called material-recycled aromatic polycarbonate resins. Examples of the used resin products include optical recording media such as optical discs, light guide plates, transparent members for vehicles such as automobile window glass, automobile headlamp lenses and windshields, containers such as water bottles, spectacle lenses, and building materials such as sound insulating walls, glass windows and corrugated sheets. Further, there may also be used nonconforming products and crushed or pulverized products obtained from sprues and runners as well as particles and the like obtained by melting these products. The amount of the regenerated aromatic polycarbonate resin used is preferably not more than 80% by weight and more preferably not more than 50% by weight on the basis of the weight of the aromatic polycarbonate resin component.

Examples of the ionizing radiation used in the present invention include corpuscular beams such as $\alpha$-ray, $\beta$-ray (electron beam), proton beam, deuteron beam and neutron beam, and electromagnetic radiations such as ultraviolet ray, $\gamma$-ray (gamma ray) and X-ray. As a generator for the ionizing radiation, there may be optionally used any of conventionally known apparatuses. In general, electron beam, $\gamma$-ray, etc., may be used from the industrial viewpoints. As to the irradiation intensity (dosage) of the ionizing radiation, for example, the electron beam used has an irradiation intensity of 10 to 500 kGy. The irradiation intensity of the ionizing radiation may be appropriately selected and determined depending upon the irradiation conditions. The irradiation intensity of the electron beam is usually 10 to 100 kGy, preferably 10 to 70 kGy and more preferably 15 to 70 kGy.

In the present invention, the time at which the ionizing radiation is irradiated may be optional, and appropriately selected and determined as long as the irradiation is carried out before the aromatic polycarbonate resin is melt-molded to produce the resin molded product. More specifically, the ionizing radiation may be irradiated to the aromatic polycarbonate resin kept in a fluidized state immediately after producing the resin by interfacial polymerization or melt polymerization, or the aromatic polycarbonate resin obtained after being solidified (into particles, or strands or pellets upon extrusion).

Among them, from the viewpoints of productivity and maintenance of the production apparatus, the ionizing radiation is preferably irradiated to the solid aromatic polycarbonate resin which is kept in a solidified state (such as particles, or strands or pellets upon extrusion) after the polymerization. Meanwhile, the particles as used herein mean so-called particles or powder, particulate materials such as pellets, granular materials, etc.

The pellets as used herein have an optional shape, more specifically, a spherical shape, a cylindrical shape, a prism shape, etc. The size (dimension) of the pellets may also be appropriately selected and determined from conventionally known optional values. However, when the the size of the pellets is too small or too large, there tend to arise problems such as poor dispersion stability and poor intrusion into a molding machine. Therefore, the size of the pellets is usually controlled such that a maximum diameter thereof is 1 to 30 mm. In particular, preferred are the pellets having a cylindrical shape or a square pole shape in which each of a diameter, a short side length and a long side length thereof lies in the range of 2 to 5 mm.

Further, in the present invention, the ionizing radiation is irradiated to the aromatic polycarbonate resin in the presence of a polar solvent. The polar solvent used in the present invention may be appropriately selected and determined from conventionally known optional ones. Specific examples of the polar solvent include water, organic acids, nitrogen-containing compounds such as amides, alcohols, nitriles, ketones and esters. These polar solvents may be used alone or in combination of any two or more thereof.

Among these polar solvents, water is preferably used because of no adverse influence on the resulting aromatic polycarbonate resin particles and facilitated posttreatments of the aromatic polycarbonate resin particles. The water used is not particularly limited as long as it is usually employed in industrial applications. Examples of the water include tap water, ion-exchanged water and pure water.

The aromatic polycarbonate resin used in the present invention may further comprise various conventionally known optional additives unless the addition thereof adversely affects the aimed objects and effects of the present invention. The contents of these additives may also be appropriately selected and determined. Specific examples of the additives include thermoplastic resins, flame retardants, impact modifiers, antistatic agents, release agents, heat stabilizers, light stabilizers, antioxidants, slip agents, anti-blocking agents, anti-fogging agents, colorants, natural oils, synthetic oils, waxes, organic fillers and inorganic fillers.

The aromatic polycarbonate resin particles obtained according to the present invention may be formed into an optional desired resin molded product by known molding methods such as injection molding, blow molding, extrusion molding and rotational molding. Among them, when the resin molded product obtained from the aromatic polycarbonate resin particles according to the present invention is used for preservation of food, the effects of the present invention become more remarkable, because there can be provided an excellent container for preserving food which is capable of exhibiting not only excellent properties inherent to the aromatic polycarbonate resin such as good heat resistance, transparency, impact strength and mechanical strength, but also such an effect of suppressing adverse influence on taste of the food filled therein.

The resin molded product for preserving food obtained according to the present invention can be used as a container of an optional shape, etc., which can serve for preserving conventionally known optional foods. More specifically, for example, the resin molded product can be used as a container for preserving liquids, liquid beverages or foods which is required to withstand heat sterilization and allow a color tone of the foods therein to be visible outside of the container. Examples of such a container include containers (bottles) for soft drinks such as fruit juice beverages, carbonated beverages, tea beverages, coffee beverages and fruit juice beverages; water bottles for natural mineral water; and containers for milk, lactic acid bacteria beverages and various dairy products.

EXAMPLES

The present invention is described in more detail below by the following Examples. However, these Examples are only illustrative and not intended to limit a scope of the present invention. In the following Examples and Comparative Examples, the amounts of residual phenols were measured by liquid chromatography, and quantitatively determined by a calibration curve method.

Reference Example 1:

After dissolving 3.7 kg of sodium hydroxide in 42 L of water, 7.2 kg of bisphenol A (BPA) as a dihydric phenol and 8 g of hydrosulfite (HD) were dissolved in the obtained solution. The resulting solution was mixed with 28 L of methylene chloride (MC), and then 96 g of p-t-butyl phenol (PTBP) was added to the obtained mixture while stirring. Next, 3.5 kg of phosgene (PG) was blown into the mixture over 60 min. After completion of blowing phosgene into the mixture, the obtained reaction solution was violently stirred and thereby emulsified. After being emulsified, 8 g of triethylamine (TEA) was added to the obtained emulsion and then stirred for about 1 hr to allow the raw components to be polymerized.

The resulting polymerization reaction solution was separated into a water phase and an organic phase. The thus separated organic phase was neutralized with phosphoric acid, and then repeatedly washed with water until the pH of the washing solution became neutral. Thereafter, the organic phase thus neutralized and washed was mixed with 0.1 L of n-heptane as a solvent for solidification thereof and then stirred, thereby preparing an organic solvent solution of a polycarbonate resin. The thus obtained polycarbonate resin solution was dropped into 80 L of warm water maintained at 45°C from above under stirring over 60 min, thereby obtaining a water slurry of polycarbonate resin particles.

The resulting water slurry was filtered to obtain wet polycarbonate resin particles. The thus obtained wet polycarbonate resin particles were dried at 140°C for 6 hr using a paddle-type dryer, thereby obtaining dried polycarbonate resin particles in the form of white particles. As a result, it was confirmed that the thus obtained dried polycarbonate resin particles had a viscosity-average molecular weight of 21300 and an end OH group content of 30 ppm. In addition, the dried particles were irradiated with γ-ray with an dosage of 25 kGy to measure an amount of residual BPA therein. As a result, it was confirmed that the amount of residual BPA in the dried particles was 1 ppm. The results are shown in Table 1.

Reference Example 2:

A 120-L reaction vessel was charged with 42 L of a 9% sodium hydroxide aqueous solution, 7.35 kg of bisphenol A (BPA), 1.50 kg of tetrabromobisphenol A (TBA) and 50 L of methylene chloride, and then 4.2 kg of phosgene was blown into the reaction vessel over 30 min while maintaining the contents in the reaction vessel at about 20°C under stirring. Next, 209 g of p-tert-butyl phenol dissolved in 2 L of methylene chloride and 7 mL of triethylamine were added to the reaction vessel, and the contents of the reaction vessel were stirred and polymerized for about 1 hr.

The resulting polymerization reaction solution was separated into a water phase and an organic phase. The thus separated organic phase was neutralized with phosphoric acid, and then repeatedly washed with water until the pH of the washing solution became neutral. Thereafter, the organic phase thus neutralized and washed was mixed with 35 L of isopropanol, thereby precipitating a polymer. The thus precipitated polymer was filtered and then dried, thereby obtaining a halogenated polycarbonate resin in the form of white particles.

As a result, it was confirmed that the thus obtained halogenated polycarbonate resin in the form of white particles had a viscosity-average molecular weight of 23700 and an end OH group content of 42 ppm. In addition, the halogenated polycarbonate resin particles were irradiated with an electron beam with an dosage of 15 kGy to measure an amount of residual TBA therein. As a result, it was confirmed that the amount of residual TBA in the particles was 2 ppm. The results are shown in Table 1.

Reference Example 3:

A raw material mixing vessel adjusted to 140°C under a nitrogen atmosphere was continuously supplied with a melted solution of diphenyl carbonate (DPC) prepared at 120°C under a nitrogen atmosphere and bisphenol A (BPA) weighed under a nitrogen atmosphere at feed rates of 205.0 mol/hr and 197.1 mol/h, respectively (molar ratio DPC/BPA: 1.04). Next, the mixed solution of the raw materials was continuously fed to a first vertical stirring polymerizer having a capacity of 100 L. On the other hand, simultaneously with initiation of feeding the above mixture, a 2-wt% cesium carbonate aqueous solution as a catalyst was continuously fed to the polymerizer through a catalyst inlet tube at a feed rate of 1.60 mL/hr (set amount of catalyst to be fed: 5 $\mu$mol per 1 mol of BPA).

The first vertical stirring polymerizer was equipped with a Maxblend blade and controlled to normal pressures and 220°C under a nitrogen atmosphere, and further the opening degree of a valve disposed on a polymer discharge line connected to a bottom of the polymerizer was controlled such that an average residence time of the contents therein was 60 min, thereby keeping a liquid level in the polymerizer constant.

Successively, the polymerization reaction solution was withdrawn from the bottom of the polymerizer and fed to second and third vertical stirring polymerizers each having a capacity of 100 L and being equipped with a Maxblend blade and then to a fourth horizontal polymerizer having a capacity of 150 L and being equipped with a grid blade in a sequential and continuous manner. The reaction conditions in the second to fourth polymerizers were respectively controlled such that as the reaction proceeded, the temperature and vacuum degree therein were increased, whereas the stirring speed therein was decreased, as described below.

During the reaction, the liquid level in the respective second to fourth polymerizers was controlled such that the average residence time therein was 60 min. In addition, in the respective polymerizers, by-produced phenols were removed through a by-product discharge tube. Under the above conditions, the respective polymerizers were continuously operated for 1500 hr. The polycarbonate resin withdrawn from a polymer discharge port disposed at the bottom of the fourth polymerizer was introduced while being kept in a melted state into a twin-screw extruder equipped with three-stage vents, and then butyl p-toluenesulfonate was added thereto in an amount of 4.0 ppm based on the weight of the polycarbonate resin (4.4 mol per 1 mol of the catalyst neutralized) to subject the polycarbonate resin to hydrogenation and deaeration, followed by pelletizing the resin.

As a result, it was confirmed that the resulting aromatic polycarbonate resin pellets had a viscosity-average molecular weight of 21500 and an end OH group content of 500 ppm. In addition, the polycarbonate resin pellets were irradiated with an electron beam with an dosage of 40 kGy to measure an amount of residual phenols therein. As a result, it was confirmed that the amount of residual phenols in the pellets was 10 ppm. The results are shown in Table 1.

Example 1:

The same procedure as defined in Example 3 was conducted except that the electron beam was irradiated to 500 g of the polycarbonate resin obtained in Example 3 which was kept immersed in 50 g of water. As a result of measuring an amount of residual phenols after irradiating the electron beam, it was confirmed that the amount of residual phenols in the resin pellets was 3 ppm. The results are shown in Table 1.

Comparative Example 1:

The same procedure as defined in Reference Example 1 was conducted except that no $\gamma$-ray was irradiated. As a result of the measurement, it was confirmed that the amount of residual BPA in the dried polycarbonate resin particles was 20 ppm. The results are shown in Table 1.

Comparative Example 2:

The same procedure as defined in Reference Example 2 was conducted except that no electron beam was irradiated. As a result of the measurement, it was confirmed that the amount of residual TBA in the halogenated polycarbonate resin in the form of white particles was 18 ppm. The results are shown in Table 1.

Comparative Example 3:

The same procedure as defined in Reference Example 3 was conducted except that no electron beam was irradiated. As a result of the measurement, it was confirmed that the amount of residual phenols in the polycarbonate resin pellets was 43 ppm. The results are shown in Table 1.
## Table 1

| | Kind of ionizing radiation and dosage (kGy) | | Existence or non-existence of water upon irradiating ionizing radiation |
|---|---|---|---|
| ✻ Example 1 | γ-ray | 25 | None |
| ✗ Example 2 | Electron beam | 15 | None |
| ✻ Example 3 | | 40 | None |
| Example 4 1 | | 40 | Existed |
| Comparative Example 1 | No irradiation | | - |
| Comparative Example 2 | | | - |
| Comparative Example 3 | | | - |

✻ Reference

## Table 1 (continued)

| | Concentration of residual impurities (ppm) | | |
|---|---|---|---|
| | BPA | TBA | Phenols |
| ✻ Example 1 | 1 | - | - |
| ✗ Example 2 | - | 2 | - |
| ✻ Example 3 | - | - | 10 |
| Example 4 1 | - | - | 3 |
| Comparative Example 1 | 20 | - | - |
| Comparative Example 2 | - | 18 | - |
| Comparative Example 3 | - | - | 43 |

✻ Reference

As is apparent from Table 1, when irradiating the ionizing radiation to the aromatic polycarbonate resin particles, the concentration of residual aromatic hydroxy compounds contained therein was reduced to an extremely low level. In particular, it was confirmed that the similar effect of reducing the amount of residual phenols which was obtained for the above interfacial method product was also remarkably exhibited even when applied to the melting method aromatic polycarbonate resin in which the concentration of residual aromatic hydroxy compounds therein is usually higher than that in the interfacial method product.

Further, when comparing the results of Reference Example 3 and Example 1 with each other, it was confirmed that the irradiation of ionizing radiation in the presence of a polar solvent such as water exhibited a remarkable effect for reducing a concentration of residual aromatic hydroxy compounds in the aromatic polycarbonate resin.

**Claims**

1. A process for producing particles of an aromatic polycarbonate resin, comprising the step of irradiating an ionizing radiation to the aromatic polycarbonate resin in the presence of a polar solvent, wherein said aromatic polycarbonate resin is obtained by reacting an aromatic dihydroxy compound with phosgene or a carbonic diester.

2. A process according to claim 1, wherein the aromatic polycarbonate resin obtained by reacting the aromatic dihydroxy compound with phosgene or the carbonic diester is solidified, and then the ionizing radiation is irradiated to the solidified aromatic polycarbonate resin.

3. A process according to claim 1 or 2, wherein the aromatic polycarbonate resin is obtained by reacting the aromatic dihydroxy compound with the carbonic diester.

4. A process according to any one of claims 1 to 3, wherein the polar solvent is selected from the list consisting of water, organic acids, nitrogen-containing compounds such as amides, alcohols, nitriles, ketones, esters, and combinations of any two or more thereof.

5. A process according to claim 4, wherein the polar solvent is water.

6. A process according to any one of claims 1 to 5, wherein the ionizing radiation is an electron beam.

7. A process according to claim 6, wherein the ionizing radiation is an electron beam with an irradiation intensity of 10 to 500 kGy.

**Patentansprüche**

1. Verfahren zur Herstellung von Partikeln aus einem aromatischen Polycarbonatharz, umfassend einen Schritt, in dem das aromatische Polycarbonatharz mit einer ionisierenden Strahlung in der Gegenwart eines polaren Lösungsmittels bestrahlt wird, wobei das aromatische Polycarbonatharz durch Reaktion einer aromatischen Dihydroxyverbindung mit Phosgen oder einem Kohlensäurediester erhalten wird.

2. Verfahren gemäß Anspruch 1, wobei das aromatische Polycarbonatharz, das durch Reaktion der aromatischen Dihydroxyverbindung mit Phosgen oder dem Kohlensäurediester erhalten wird, verfestigt wird und dann das verfestigte aromatische Polycarbonatharz mit der ionisierenden Strahlung bestrahlt wird.

3. Verfahren gemäß Anspruch 1 oder 2, wobei das aromatische Polycarbonatharz durch Reaktion der aromatischen Dihydroxyverbindung mit dem Kohlensäurediester erhalten wird.

4. Verfahren gemäß einem der Ansprüche 1 bis 3, wobei das polare Lösungsmittel ausgewählt ist aus der Liste bestehend aus Wasser, organischen Säuren, stickstoffhaltigen Verbindungen, wie Amiden, Alkoholen, Nitrilen, Ketonen, Estern, und Kombinationen von zwei oder mehreren davon.

5. Verfahren gemäß Anspruch 4, wobei das polare Lösungsmittel Wasser ist.

6. Verfahren gemäß einem der Ansprüche 1 bis 5, wobei die ionisierende Bestrahlung ein Elektronenstrahl ist.

7. Verfahren gemäß Anspruch 6, wobei die ionisierende Strahlung ein Elektronenstrahl mit einer Bestrahlungsintensität von 10 bis 500 kGy ist.

**Revendications**

1. Processus pour produire des particules d'une résine de polycarbonate aromatique, comprenant l'étape d'irradiation d'un rayonnement ionisant sur la résine de polycarbonate aromatique en présence d'un solvant polaire, dans lequel ladite résine de polycarbonate aromatique est obtenue en faisant réagir un composé dihydroxy aromatique avec un phosgène ou un diester carbonique.

2. Processus selon la revendication 1, dans lequel la résine de polycarbonate aromatique obtenue en faisant réagir le composé dihydroxy aromatique avec le phosgène ou le diester carbonique est solidifiée, et ensuite le rayonnement ionisant est irradié sur la résine de polycarbonate aromatique solidifiée.

3. Processus selon la revendication 1 ou 2, dans lequel la résine de polycarbonate aromatique est obtenue en faisant réagir le composé dihydroxy aromatique avec le diester carbonique.

4. Processus selon l'une quelconque des revendications 1 à 3, dans lequel le solvant polaire est sélectionné à partir de la liste constituée par de l'eau, des acides organiques, des composés contenant de l'azote tels que des amides, des alcools, des nitriles, des cétones, des esters, et des combinaisons de deux quelconques ou plus de ceux-ci.

5. Processus selon la revendication 4, dans lequel le solvant polaire est de l'eau.

6. Processus selon l'une quelconque des revendications 1 à 5, dans lequel le rayonnement ionisant est un faisceau électronique.

7. Processus selon la revendication 6, dans lequel le rayonnement ionisant est un faisceau électronique ayant une intensité d'irradiation de 10 à 500 kGy.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 59038967 A
- US 6303375 B1
- US 4367186 A
- US 3150066 A
- JP 1096212 A
- JP 9052949 A
- JP 2000351844 A

**Non-patent literature cited in the description**

- *Macromol. Chem.,* 1965, vol. 88, 215